# EUROPÄISCHE PATENTSCHRIFT

(11) **EP 0 630 843 B1**
(45) Veröffentlichungstag und Bekanntmachung des Hinweises auf die Patenterteilung: **09.10.1996**
(21) Anmeldenummer: 94107295.1
(22) Anmeldetag: 10.05.1994
(51) Int. Cl.: B65G 69/28

(54) **Überladebrücke für Rampen**
Loading bridge for ramps
Pont de chargement pour rampes

(30) Priorität: 21.05.1993 DE 4316957
(43) Veröffentlichungstag der Anmeldung: 28.12.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- FR-A- 2 285 493

## Beschreibung

Die Erfindung betrifft eine Überladebrücke für Rampen mit einer an ihrem rampenseitigen Ende um eine Waagerechte Achse verschwenkbaren Brückenplatte und einer am freien Ende der Brückenplatte angeordneten von der etwa senkrechten Ruhestellung aus in eine etwa der Brückenebene entsprechenden Arbeitsstellung klappbaren Verlängerung zum Auflegen und Abstützen auf der zu be- bzw. entladenden Plattform, wobei die Verlängerung an einem quer verlaufenden Bolzen angelenkt ist, der in einem Auge einer fest mit der Brückenplatte verbundenen Halterung gelagert ist (siehe zum Beispiel die FR-A-2 285 493).

Bei den bekannten Überladebrücken dieser Art ist die das Auge aufweisende Halterung durch Schweissen mit der Brückenplatte verbunden, und zwar an einem quer zur Brücke verlaufenden, plattenförmigen Versteifungselement. Damit sind nicht nur für das Versteifungselement, sondern auch für die Halterung selbst Schweissarbeiten erforderlich.

Der Erfindung liegt die Aufgabe zugrunde, die eingangs erwähnten Überladebrücken so zu verbessern, dass die Anbringung und Montage der genannten Halterungen vereinfacht vollzogen werden können, ohne bezüglich der Dauerstandsfestigkeit Nachteile in Kauf nehmen zu müssen.

Zur Lösung dieser Aufgabe liegt erfindungsgemäss die Halterung an der Unterseite des Deckbleches der Brückenplatte an, umschliesst mit ihrem rampenseitigen, hinteren Ende bogenförmig einen quer zur Brückenplatte verlaufenden Stab und wird zudem im Bereich ihres vorderen Endes von einer parallel zu dem Stab verlaufenden Stange unterfangen. Mit Vorteil sind dabei der Stab und die Stange an den längs zur Brückenplatte verlaufenden Unterzügen z.B. durch Einführen in Durchbrechungen dieser Unterzüge gelagert. Zweckmässigerweise weist die Halterung zudem einen nach oben gerichteten Vorsprung zur Anlage an der Stirnseite des Deckbleches auf.

Eine solche Ausbildung und Anordnung der erwähnten Halterung erübrigen eine Schweissbefestigung und zudem besondere, quer zur Brücke verlaufende, plattenförmige Versteifungen. Wichtig ist dabei, dass durch die erwähnte Stange und den genannten Stab einmal eine formschlüssige Verbindung zur Brückenplatte, zum anderen aber auch eine ausreichend feste Verbindung zur Brückenplatte erreicht werden, um ein Abklappen der Halterung von der Brückenplatte zu vermeiden. Die Befestigung der Stange bzw. des Stabes kann dabei mit Vorteil in einfacher Weise durch Einstecken in Bohrungen od. dgl. der benachbart liegenden Unterzüge der Brückenplatte geschehen, während die erwähnte bogenförmige Gestaltung der Halterung an einem Ende die Möglichkeit eröffnet, bei der Montage der Halterung den erwünschten Formschluss durch eine Schwenkbewegung der Halterung herbeizuführen.

Weitere Einzelheiten der Erfindung werden anhand der Zeichnung erläutert, in der ein Ausführungsbeispiel der Erfindung dargestellt ist. Es zeigen :
Fig. 1 eine Teildraufsicht auf einen vorderen Abschnitt einer Überladebrücke mit eingeklappter Verlängerung,
Fig. 2 einen Schnitt durch eine Überladebrücke nach der Linie II - II von Fig. 1 unter schematischer Wiedergabe des hinteren Teils der Überladebrücke, wobei jedoch im Gegensatz zu Fig. 1 die Verlängerung ausgeklappt ist und sich in der Wirkstellung befindet,
Fig. 3 einen einen Schnitt nach der Linie III - III von Fig. 1,
Fig. 4 eine vergrösserte Wiedergabe aus Fig. 3 im Umfang des Kreises IV und
Fig. 5 einen Längsschnitt durch den vorderen Teil einer Brückenplatte während der Montage eines Konstruktionsteils ( Halterung ).

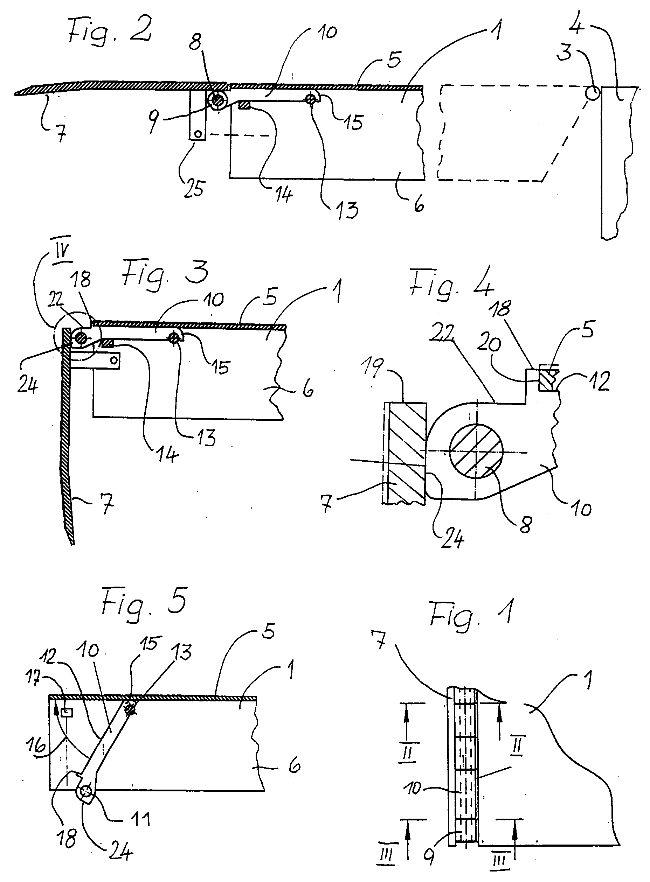

Die Brückenplatte 1 der Überladebrücke ist an ihrem hinteren, rampenseitigen Ende um eine waagerechte Achse 3 an der Rampe 4 gelagert und besteht im wesentlichen aus einem Deckblech 5 und darunter befindlichen, einander parallelen, mit gegenseitigem Abstand angeordneten Unterzügen 6, die sich bis an das vordere Ende des Deckbleches 5 erstrecken. Am freien, vorderen Ende ist die Brückenplatte 1 mit einer Verlängerung 7 versehen, die zur Auflage auf der zu be- bzw. entladenden Plattform dient; über diese Verlängerung 7 stützt sich auch die Brückenplatte 1 während des Brückenbetriebes auf der Plattform ab und folgt damit allen Höhenänderungen der Plattform. Befindet sich die Verlängerung 7 praktisch in der durch das Deckblech 5 bestimmten Ebene, so ist die Verlängerung 7 ausgeklappt. Bei Nichtbetrieb der Brücke ist diese Verlängerung 7 jedoch nach unten geklappt und nimmt dann eine etwa senkrechte Lage ein ( Fig. 3 ).

Die Verlängerung 7 ist mit Hilfe des waagerechten Bolzens 8 und einem an der Verlängerung 7 befindlichen Auge 9, das den Bolzen 8 umschliesst, angelenkt, und die Erfindung befasst sich vorwiegend mit der Befestigung dieses Bolzens 8 ggfs. fluchtender Bolzen 8 an der Brückenplatte 1, und zwar mit geringem Abstand vor dem freien Ende der Brückenplatte geringfügig unterhalb des Deckbleches 5.

Zur Befestigung des Bolzens 8 an der Brückenplatte 1 dienen mehrere über die Brückenbreite verteilt angeordnete Halterungen 10, die eine Bohrung 11 zur Aufnahme des Bolzens 8 aufweist. Die Halterungen 10 sind riegelartig gestaltet und als Press- oder Formkörper z.B. aus Stahl oder Aluminiun ausgebildet. Oben haben sie eine ebene Fläche 12 zur Anlage an der Unterseite des Deckbleches 5.

Zur Befstigung und unverschiebbaren Lagerung der Halterung 10 an der Brückenplatte 1 dienen quer zur Brücke verlaufende, die Unterzüge 6 in entsprechenden Durchbrechungen durchsetzende Elemente, und zwar in Form einer Stange 13 und eines Stabes 14, wobei die Stange 13 einen runden Querschnitt und der Stab 14 einen rechteckigen bzw. quadratischen Querschnitt haben. Diese Elemente werden also in einfacher Weise durch fluchtende Bohrungen bzw. Ausnehmungen in den Unterzügen 6 hindurchgesteckt und können - falls erforderlich - noch gegen einen axialen Versatz gesichert werden.

Am hinteren Ende hat die Halterung 10 eine der Stange 13 entsprechende halbkreisförmige Ausnehmung zur Aufnahme der Stange 13, um einen Formschluss herbeizuführen bzw. einen Versatz der Halterung 10 in Längsrichtung auszuschliessen. Das rampenseitige Ende der Halterung 10 hat ferner einen Abschluss 15 nach Art eines Abschnittes eines Kreisringes. Damit ist es möglich, zunächst die sich über die Brückenbreite erstreckende Stange 13 einzuführen und im Anschluss daran, gemäss Fig. 5 die Halterung 10 von unten her in die waagerechte Stellung einzuschwenken. Ist dann diese Stellung eingenommen, wird der Stab 14 eingezogen. Damit sind alle über die Brückenbreite verteilt angeordneten Halterungen 10 fixiert. Die Schwenkrichtung der Halterungen 10 ist in Fig. 5 bei 16 angedeutet. In Fig. 5 ist auch eine Ausnehmung 17 eines Unterzuges 6 zur Aufnahme des Stabes 14 ersichtlich.

Wichtig ist auch eine senkrecht nach oben stehende Nase 18 der Halterung 10; sie bewirkt, dass die hintere Stirnfläche 19 nicht unmittelbar an die vordere Stirnfläche 20 des Deckbleches 5 anstösst; damit können Ungenauigkeiten ausgeglichen werden. Zu beiden Seiten der Nase 18 haben zudem die dort befindlichen Auflageflächen 12 bzw. 22 für das hintere Ende der Verlängerung 7 unterschiedliche Höhenstellungen, um so die unterschiedlichen Wandstärken der Verlängerung 7 und des Deckbleches 5 ausgleichen zu können, und zwar im Hinblick auf den Wunsch, gemäss Fig. 2 einen stufenlosen Übergang Zwischen der Brückenplatte 1 und der Verlängerung 7 herbeizuführen.

Die Bohrung der Halterung 10 der Halterung 10 zur Aufnahme des Bolzens 8 hat zudem eine senkrechte Anschlagfläche 24 für die Innenfläche der Verlängerung 7, um die senkrechte Ruhestellung der Verlängerung 7 gemäss Fig. 3 zu gewährleisten. Im übrigen ist die Verlängerung 7 an ihrer Unterseite noch mit einem Hebelarm 25 versehen, an dem Schwenkzylinder od. dgl. angreifen können.

Aus Fig. 1 ist erkennbar, dass das Auge 9 und die Halterung 10 aufeinander folgen; die Reihenfolge richtet sich dabei nach der Anzahl der installierten Halterungen 10 und der Häufigkeit der an der Verlängerung 7 befindlichen Augen 9.

Ferner lassen die Fig. 3 und 5 auch erkennen, dass die radiale Erstreckung des Abschlusses 15 praktisch dem lichten Abstand der Stange 13 vom Deckblech 5 entspricht, um so eine satte, sichere Lagerung der Halterung 10 herbeizuführen.

## Patentansprüche

1. Überladebrücke für Rampen (4) mit einer an ihrem rampenseitigen Ende um eine waagerechte Achse (3) verschwenkbaren Brückenplatte (1) und einer am freien Ende der Brückenplatte (1) angeordneten, von der etwa senkrechten Ruhestellung aus in eine etwa der Brückenebene entsprechenden Arbeitsstellung klappbaren Verlängerung (7) zum Auflegen und Abstützen auf der zu be- bzw. entladenden Plattform, wobei die Verlängerung (7) an einem quer verlaufenden Bolzen (8) angelenkt ist, der in einem Auge (9) einer fest mit der Brückenplatte (1) verbundenen Halterung (10) gelagert ist, dadurch gekennzeichnet, dass die Halterung (10) an der Unterseite eines Deckbleches (5) der Brückenplatte (1) anliegt, mit ihrem hinteren, rampenseitigen Ende bogenförmig eine quer zur Brückenplatte (1) verlaufende Stange (13) umschliesst und im Bereich ihres vorderen Endes von einer parallel zu der Stange (13) verlaufender Stab (14) unterfangen ist.

2. Brücke nach Anspruch 1, dadurch gekennzeichnet, dass dere Stab (14) und die Stange (13) ihrem Querschnitt entsprechende Ausnehmungen (17) in längs zur Brückenplatte (1) verlaufenden Unterzügen (6) durchsetzen.

3. Brücke nach Anspruch 1, dadurch gekennzeichnet, dass die Halterung (10) an ihrer Oberseite einen Vorsprung (18) aufweist, der vor der Stirnfläche (20) des Deckbleches (5) der Brückenplatte (1) angeordnet ist und einen Anschlag für die hochgeklappte Verlängerung (7) bildet.

4. Brücke nach Anspruch 1, dadurch gekennzeichnet, dass die an der Oberseite der Halterung (10) befindlichen Anlageflächen (12,22) für die Unterseite der Verlängerung (7) und des Deckbleches (5) der Verlängerung (7) in unterschiedlich hohen Ebenen liegen und derart angeordnet sind, dass die Oberfläche der Brückenplatte (1) und die Oberfläche der Verlängerung (7) in einer Ebene liegen.

5. Brücke nach Anspruch 1, dadurch gekennzeichnet, dass die Halterung (10) nach vorne hin durch eine senkrechte Anlagefläche (24) für die Unterseite der Verlängerung (7) begrenzt ist.

6. Brücke nach Anspruch 1, dadurch gekennzeichnet, dass die Stange (13) einen runden Querschnitt hat und die Ausnehmung zur Aufnahme der Stange (13) in der Halterung (10) im wesentlichen halbkreisförmig geformt ist.

7. Brücke nach Anspruch 1 und 6, dadurch gekennzeichnet, dass das rampenseitige Ende der Halterung (10) im wesentlichen nach Art eines Abschnittes eines Kreisbogens geformt ist.

8. Brücke nach Anspruch 7, dadurch gekennzeichent, dass die radiale Erstreckung des Kreisbogens (15) praktisch dem Abstand der Stange (13) vom Deckblech (5) entspricht.

9. Brücke nach Anspruch 1, 7 und 8, dadurch gekennzeichnet, dass die Halterung (10) praktisch spielfrei am Deckblech (5), an der Stange (13) und am Stab (14) anliegt.

10. Brücke nach Anspruch 3, dadurch gekennzeichnet, dass der Vorsprung (18) an der Stirnfläche (20) anliegt.

## Claims

1. Transfer bridge for platforms (4), having a bridge plate (1) which is pivotable at its platform end about a horizontal axis (3), and an extension member (7) which is disposed at the free end of the bridge plate (1) and is pivotable from the substantially perpendicular inoperative position into an operative position, corresponding substantially to the bridge plane, for deposit and support on the deck to be loaded or unloaded, the extension member (7) being pivotally mounted on a transversely extending pin (8), which is mounted in an eyelet (9) of a holder (10), which is securely connected to the bridge plate (1), characterised in that the holder (10) abuts against the underside of a cover plate (5) of the bridge plate (1) and surrounds a rod (13) with its rear platform end in an arcuate manner, which rod extends transversely to the bridge plate (1), and said holder is supported in the region of its front end by a bar (14), which extends parallel to the rod (13).

2. Bridge according to claim 1, characterised in that the bar (14) and the rod (13) traverse recesses (17), corresponding to their cross-section, in support members (6), which extend longitudinally relative to the bridge plate (1).

3. Bridge according to claim 1, characterised in that the holder (10) has a projection member (18) on its upper side, which projection member is disposed in front of the end face (20) of the cover plate (5) of the bridge plate (1) and forms a stop member for the upwardly pivoted extension member (7).

4. Bridge according to claim 1, characterised in that the abutment faces (12,22), situated on the upper side of the holder (10), for the underside of the extension member (7) and of the cover plate (5) of the extension member (7) lie in planes of different height and are so disposed that the upper face of the bridge plate (1) and the upper face of the extension member (7) lie in one plane.

5. Bridge according to claim 1, characterised in that the holder (10) is defined forwardly by a vertical abutment face (24) for the underside of the extension member (7).

6. Bridge according to claim 1, characterised in that the rod (13) has a circular cross-section, and the recess for accommodating the rod (13) in the holder (10) has a substantially semicircular configuration.

7. Bridge according to claims 1 and 6, characterised in that the platform end of the holder (10) is shaped substantially in the form of a portion of an arc.

8. Bridge according to claim 7, characterised in that the radial extension of the arc (15) corresponds practically to the spacing between the rod (13) and the cover plate (5).

9. Bridge according to claims 1, 7 and 8, characterised in that the holder (10) abuts in a practically clearance-free manner against the cover plate (5), against the rod (13) and against the bar (14).

10. Bridge according to claim 3, characterised in that the projection member (18) abuts against the end face (20).

## Revendications

1. Niveleur de quai (4), comportant un tablier (1) basculant à son extrémité côté quai par rapport à un axe (3) horizontal, et un prolongement (7) monté à l'extrémité libre du tablier (1), pouvant être rabattu de la position de repos à peu près horizontale à une position de travail qui correspond à peu prés au plan du niveleur, destiné à s'appliquer et à s'appuyer sur la plate-forme à charger ou à décharger, le prolongement (7) étant articulé à un axe (8) qui s'étend transversalement et qui est monté dans un oeillet (9) d'une fixation (10) solidaire du tablier (1), caractérisé en ce que la fixation (10) s'applique à la face inférieure d'une tôle (5) de couverture du tablier (1), entoure en arc, de son extrémité arrière côté quai, une barre (13) s'étendant transversalement au tablier (1) et est de plus étayée dans la région de son extrémité avant par un barreau s'étendant parallèlement à la barre (13).

2. Niveleur de quai suivant la revendication 1, caractérisé en ce que le barreau (14) et la barre (13) traversent des cavités (17) correspondant à leur section transversale, ménagées dans des sous-poutres 6 s'étendant le long du tablier (1).

3. Niveleur de quai suivant la revendication 1, caractérisé en ce que la fixation (10) comporte sur sa face supérieure une partie (18) en saillie qui est prévue avant la face (20) frontale de la tôle (5) de couverture du tablier (1) et forme une butée pour le prolongement (7) rabattu vers le haut.

4. Niveleur de quai suivant la revendication 1, caractérisé en ce que les surfaces (12, 22) d'application, qui se trouvent sur la face supérieure de la fixation (10) et qui sont destinées à la face inférieure du prolongement (7) et de la tôle (5) de couverture, se trouvent dans des plans situés à différents niveaux et sont prévues de manière que la surface du tablier (1) et la surface du prolongement (7) se trouvent dans un plan.

5. Niveleur de quai suivant la revendication 1, caractérisé en ce que la fixation (10) est délimitée vers l'avant par une surface (24) d'application verticale destinée à la face inférieure du prolongement (7).

6. Niveleur de quai suivant la revendication 1, caractérisé en ce que la barre (13) a une section transversale circulaire et en ce que la cavité de réception de la barre (13) qui est ménagée dans la fixation 10 est de forme sensiblement semi-circulaire.

7. Niveleur de quai suivant la revendication 1 ou 6, caractérisé en ce que l'extrémité côté quai de la fixation (10) a une forme qui est sensiblement du genre d'un tronçon d'arc de cercle.

8. Niveleur de quai suivant la revendication 7, caractérisé en ce que l'extension radiale de l'arc de cercle (15) correspond pratiquement à l'écartement de la barre (13) par rapport à la tôle (5) de couverture.

9. Niveleur de quai suivant la revendication 1, 7 ou 8, caractérisé en ce que la fixation (10) s'applique pratiquement sans jeu à la tôle (5) de couverture, à la barre (13) et au barreau (14).

10. Niveleur de quai suivant la revendication 3, caractérisé en ce que la partie (18) en saillie s'applique à la face (20) frontale.
